Europäisches Patentamt

European Patent Office

Office européen des brevets

(11) Publication number: **0 035 913**
**B1**

(12)     **EUROPEAN PATENT SPECIFICATION**

(45) Date of publication of patent specification: **17.10.84**

(21) Application number: **81301005.5**

(22) Date of filing: **10.03.81**

(51) Int. Cl.³: **B 22 D 13/04,** B 22 D 19/00,
B 22 D 19/02, B 62 D 55/14,
B 60 B 3/06

(54) A wheel for a track-laying vehicle.

(30) Priority: **12.03.80 GB 8008440**

(43) Date of publication of application:
**16.09.81 Bulletin 81/37**

(45) Publication of the grant of the patent:
**17.10.84 Bulletin 84/42**

(84) Designated Contracting States:
**AT BE CH DE FR GB IT LI LU NL SE**

(56) References cited:
**EP-A-0 005 937
DE-A-2 515 443
DE-A-2 820 010**

(73) Proprietor: **GKN TECHNOLOGY LIMITED
Birmingham New Road
Wolverhampton WV4 6BW (GB)**

(72) Inventor: **Edwards, Michael Frederick
8 Greenway Gardens Pattingham
Wolverhampton, Staffs. (GB)**
Inventor: **Barlow, John
9 Wesley Road
Willenhall, Staffs. (GB)**
Inventor: **Foreman, Frederick Arthur
83 Farrington Road
Wolverhampton, Staffs. (GB)**
Inventor: **Williams, Gwynne
105 Chillington Drive Codsall
Wolverhampton, Staffs. (GB)**

(74) Representative: **Robertson, Bernard Collett et al
Guest Keen and Nettlefolds plc Group Patents
and Licensing Department P.O. Box 55 Ipsley
House Ipsley Church Lane
Redditch Worcestershire B98 0TL (GB)**

Courier Press, Leamington Spa, England.

## Description

This invention relates wheels for track laying vehicles manufactured by the technique known variously as squeeze forming, squeeze casting or extrusion casting which, for the sake of convenience, throughout this specification will be referred to as "squeeze forming". Basically the technique of squeeze forming comprises introducing liquid metal into a first part of a mould, closing the mould under pressure so that the liquid metal is displaced by the mould closure to fill a cavity within the mould without entrapping air, maintaining the metal under pressure whilst solidification takes place so as to ensure that any shrinkage cavities which may form are closed and filled, and then opening the mould and removing the formed article.

Metals most conveniently employed to produce squeeze formed articles are aluminium and aluminium alloys and although such squeeze formed aluminium or aluminium alloy articles are of sound metallurgical structure and strength, they can sometimes be subject to unacceptably severe wear conditions. For example, a wheel for a track-laying vehicle of the type described in EP—A—0 005 937 is producible by squeeze forming in aluminium or aluminium alloy but that part of the wheel which is engaged by the steel horns of the track is subject to extreme wear conditions.

It is an object of the present invention to provide an improved wheel for a track laying vehicle wherein wear-resistant means are incorporated.

In accordance with the invention there is provided a wheel for a track laying vehicle comprising a pair of light metal wheel elements secured together, each wheel element comprising a disc and a rim, the two wheel elements being secured together by their discs thus to provide a continuous groove between the adjacent edges of the rims for accommodating the horns of a track passing beneath said rims, said adjacent rim edges each being provided with reinforcement for resisting wear imparted thereto by the track horns characterised in that the reinforcement at each of said adjacent rim edges comprises a set of circumferentially spaced apart hard metal studs welded onto and supported by a metal support wire, all of said studs and their support wire being embedded within the rim edge and bonded to the light metal of which the respective rim is formed.

The light metal comprising each said wheel element is preferably aluminium or magnesium or an alloy thereof and the metal comprising the studs and their support wire is preferably steel.

Each stud is preferably of a cylindrical form having its central longitudinal axis substantially parallel to the axis of rotation of the wheel, the studs being welded onto and supported by the support wire at their ends remote from the respective rim edge. The studs may be of differing lengths providing a differential wear life to the respective rim edge in which they are embedded.

A light metal wheel element as described above is producible by squeeze forming characterised by the steps of locating a said set of hard metal wear-resistant studs on their support wire in a mould at a position corresponding to the position at which it is desired to produce the wear-resistant rim edge in the formed wheel element, the hardness of the hard metal studs being greater than the hardness of the metal being formed; introducing molten metal into the mould; closing the mould under pressure so that the molten metal is displaced by the mould closure to fill a cavity in the mould within which the hard metal studs and their support wire are located; maintaining the metal under pressure whilst solidification thereof takes place and the hard metal studs and their support wire become embedded therein, and opening the mould and extracting the formed wheel element.

Conveniently the hard metal studs and their support wire are initially located in a first part of the mould which provides at least part of the die cavity whereby, when the molten metal is introduced to said first part of the mould and the mould is closed under pressure, the metal is displaced to fill the cavity and to flow on to and around the hard metal studs and their support wire.

Alternatively the hard metal studs and their support wire may be initially located in that part of the die cavity wherein the molten metal is introduced so that the liquid metal flows at least partially on to and around the hard metal studs and their support wire before the mould is closed under pressure and the metal is displaced to fill the cavity.

As a further alternative the hard metal studs and their support wire may be releasably carried by a second part of the mould providing part of the die cavity which is brought towards said first part of the mould when the mould is closed under pressure, the molten metal then being displaced to fill the cavity and to flow on to and around the hard metal studs and their support wire.

The invention will become apparent from the following description given herein solely by way of example with reference to the accompanying drawings wherein:

Figures 1 to 3 show sectional diagrammatic views of three steps in the sequence of squeeze forming a metal wheel element in accordance with the invention wherein a set of hard metal studs are incorporated around the rim of the wheel element in accordance with the invention;

Figure 4 is a top plan view of the set of studs and their support wire;

Figure 5 is a side view of the stud set of Figure 4;

Figure 6 is an end view of one of a pair of T shaped wheel elements for use in a track laying vehicle for bolting together and to a hub to form a wheel wherein a set of hard metal studs is incorporated at the inner rim edges;

Figure 7 is a side cross sectional view of the wheel of Figure 6 showing also the hub and track; and

Figure 8 is a side view of a track assembly in a track-laying vehicle incorporating wheels of the type shown in Figures 6 and 7.

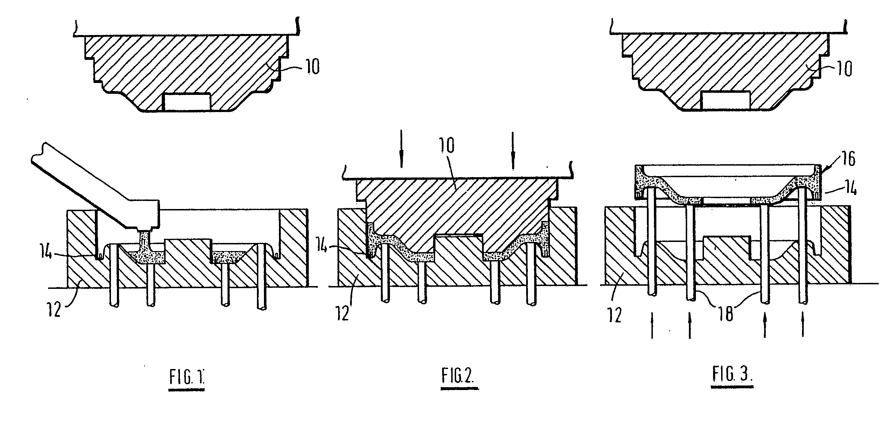

Referring to Figure 1 of the drawings there is illustrated a mould having an upper mould part 10 and a lower mould part 12 configured to provide, when closed together, a die cavity in the shape of a wheel element. The wheel element is produced by the squeeze forming technique out of an aluminium or aluminium alloy material which is introduced in molten liquid form (by means of a suitable inlet nozzle) to that part of the die cavity provided in the lower mould portion.

To provide a wear-resistant surface to the rim of the wheel element, a set of hard metal wear resistant studs 14 is located in the die cavity in the lower mould part 12 at a position corresponding to that which will provide, in the formed article, the rim thereof. Thus, referring to Figure 1, a ring of cylindrical steel studs on a support member is located around the periphery of the die cavity in the lower mould part 12 before the liquid aluminium or aluminium alloy is introduced to the mould. After a predetermined quantity of liquid metal has been introduced to the die cavity the mould is closed by downward movement of the upper mould part 10. Such closure of the mould under pressure forces the liquid metal within the die cavity to flow radially outwardly and upwardly of the cavity defined between the upper and lower mould parts 10 and 12 whereby the liquid metal also flows on to and around the stud set 14 as is clearly shown in Figure 2.

The mould is held closed under pressure whilst solidification of the metal takes place so as to ensure that any shrinkage cavities which may form are closed and filled and during which time the stud set 14 becomes embedded in the metal. After a predetermined time the upper mould part 10 is withdrawn upwardly away from the lower mould portion, as shown in Figure 3, and the formed wheel element 16 is ejected from the die cavity by means of suitable ejector rods 18.

Referring to Figure 3, it will be seen that the squeeze formed wheel element 16 is thus provided with the wear-resistant stud set 14 around the lower edge of its rim and such a wheel element is conveniently used as part of a back-to-back wheel arrangement for the track of a track-laying vehicle substantially of the type described and illustrated in EP—A— 0 005 937.

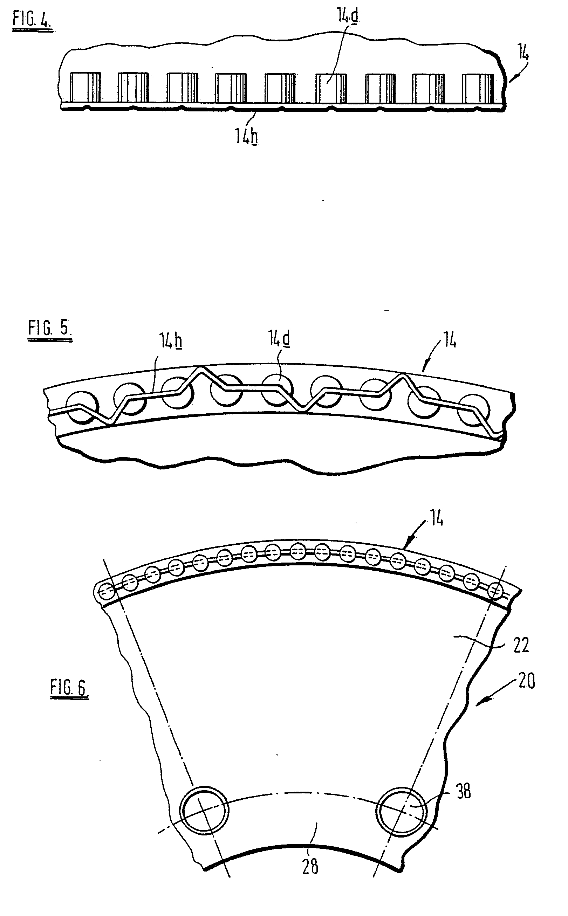

Referring now to Figures 4 and 5 there is more particularly shown a stud set 14 suitable for location in the mould as hereinbefore described for providing a wear resistant surface to the edge of a wheel element rim. In this embodiment the actual wear resistance is afforded by a set of cylindrical hardened steel studs conveniently having a hardness within the range 350—1000 VPN as compared with the hardness of the aluminium forming the wheel element itself which has a hardness within the range 60—200 VPN. A plurality of studs 14d are each spot welded at their rear face to a single steel wire 14h which, as will be clearly seen from Figure 5, is of convoluted shape. This convoluted shape of the support wire enables the stud set 14 to be located more positively in the mould whereby there is less likelihood of its position being disturbed during the squeeze forming operation prior to solidification of the molten aluminium.

It will be appreciated that in the arrangement shown in Figures 4 and 5 the actual stud length may be varied as between adjacent studs to provide for the possibility of differential wear life at the wheel element rim edge. Thus, after the wheel element has been formed, some of the studs may be visible at the rim edge surface whilst other studs may be totally embedded within the aluminium and be located beneath the rim edge surface. However in all of the variations in design of the stud assembly, it will be appreciated that, after the wheel element has been formed, the studs will be effectively mechanically locked into the wheel element rim edge due to the penetration of the molten aluminium around the studs and their support wire during the forming operation. Furthermore an intermetallic bond will be established between the steel studs, the support wire and the aluminium.

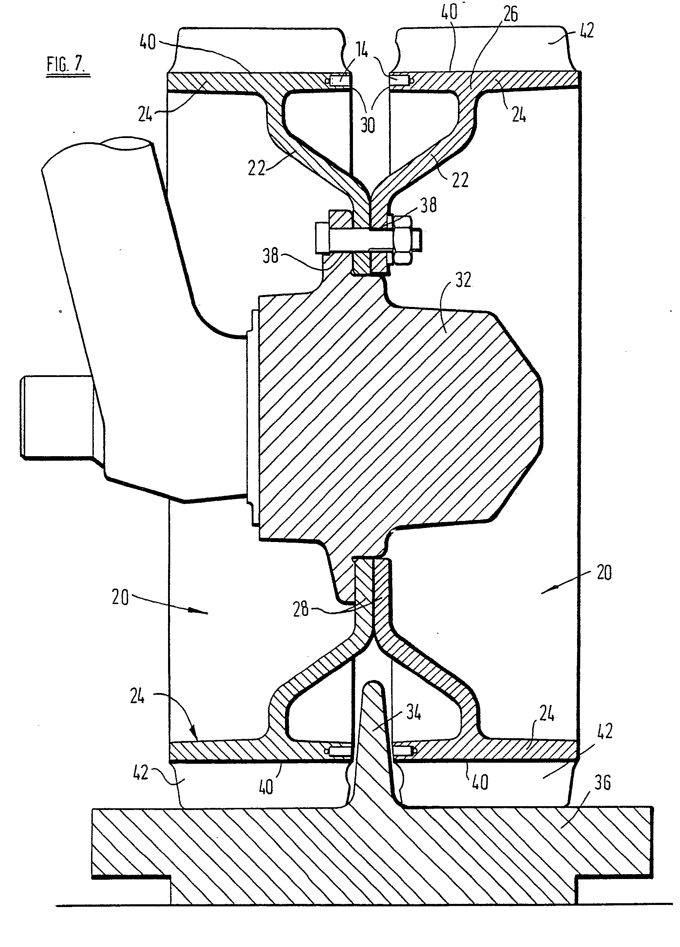

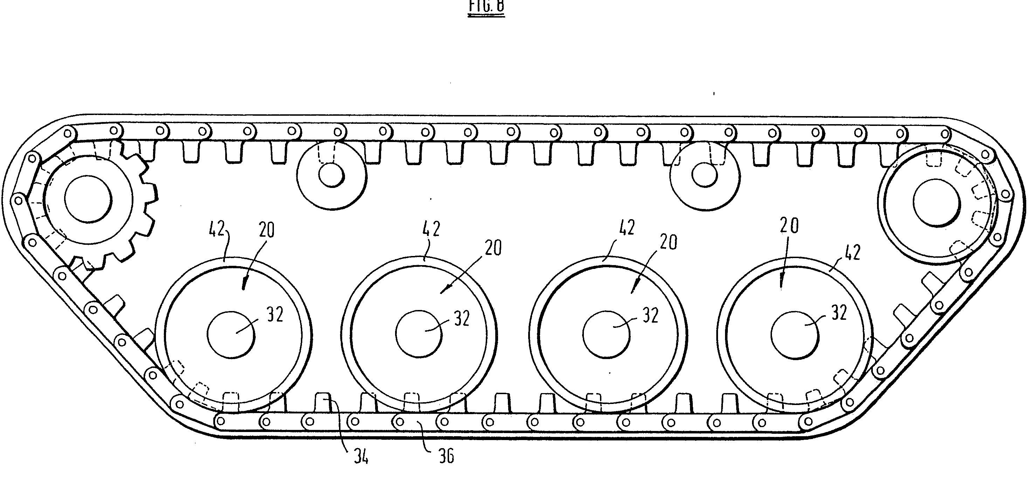

Referring now to Figures 6 to 8, there is shown squeeze formed aluminium wheel elements 20 with wear-resistant steel studs 14 at the rim edges produced in accordance with the invention as used in a wheel of a track laying vehicle. Referring particularly to Figures 6 and 7, each wheel element 20 comprises a dished disc portion 22 and a rim portion 24 wherein the disc merges into the rim substantially in the axially central zone 26 of the rim so that the adjacent portion of the disc and rim together are of T-shape.

The centre portion 28 of the disc 22 extends axially beyond the edge 30 of the rim 24 so that, when a pair of similar wheel elements 20 are secured to the hub 32, the wheel elements are in back-to-back configuration and a continuous circumferentially extending groove is defined between the two wheel elements into which the horns 34 of the track 36 are arranged to extend and to guide the track beneath the wheel. Appropriate bolt holes 38 are formed in the centre portion 28 for securing the two wheel element 20 together and also for securing the wheels to a vehicle hub 32.

It will be seen that the hardened steel stud set 14 extends circumferentially around the wheel element rim edges 30 between which the track horns 34 project so as to afford the required wear resistance. In the particular arrangement shown in Figures 6 and 7 the cylindrical steel studs are spot welded at their rear faces to a single length of steel wire.

It will also be seen that the outer peripheral surfaces 40 of the wheel element rims 24 are cylindrical for locating a solid rubber tyre 42 on each rim; the tyre being conveniently moulded in situ on the rim.

## Claims

1. A wheel (20) for a track laying vehicle comprising a pair of light metal wheel elements secured together, each wheel element comprising a disc (22) and a rim (24), the two wheel elements being secured together by their discs thus to provide a continuous groove between the adjacent edges (30) of the rims (24) for accommodating the horns (34) of a track (36) passing beneath said rims, said adjacent rim edges (30) each being provided with reinforcement (14) for resisting wear imparted thereto by the track horns (34) characterised in that the reinforcement (14) at each of said adjacent rim edges (30) comprises a set of circumferentially spaced apart hard metal studs (14$d$) welded onto and supported by a metal support wire (14$h$), all of said studs and their support wire being embedded within the rim edge (30) and bonded to the light metal of which the respective rim (24) is formed.

2. A wheel as claimed in Claim 1 further characterised in that the light metal comprising each said wheel element (22—24) is aluminium or magnesium or an alloy thereof and that the metal comprising the studs (14$d$) and their support wire (14$h$) is steel.

3. A wheel as claimed in either one of Claims 1 or 2 further characterised in that each stud (14$d$) is of cylindrical form having its central longitudinal axis substantially parallel to the axis of rotation of the wheel (20), the studs being welded onto and supported by the support wire (14$h$) at their ends remote from the respective rim edge (30).

4. A wheel as claimed in any one of the preceding claims further characterised in that the studs (14$d$) are of differing lengths providing a differential wear life to the respective rim edge (30) in which they are embedded.

## Revendications

1. Une roue (20) pour véhicule à chenilles, comprenant une paire d'éléments de roue en métal léger fixés l'un à l'autre, chaque élément de roue comprenant un disque (22) et une jante (22), les deux éléments de roue étant fixés l'un à l'autre par leurs disques, pour ménager ainsi une gorge continue formée entre les bords adjacents (30) des jantes (24) pour recevoir les dents (34) d'une chenille (36) qui passent au-dessous du niveau desdites jantes, lesdits bords adjacents (30) des jantes étant munis chacun d'un renforcement (14) pour résister à l'usure qui leur est imposée par les dents (34) de la chenille, caractérisée en ce que le renforcement (14) prévu à chacun desdits bords adjacents (30) des jantes comprend un jeu de chevilles en métal dur (14$d$) espacées circonférentiellement, qui sont soudées sur et supportées par un fil métallique support (14$h$), toutes les chevilles et leur fil support étant noyés dans le bord (30) de la jante et fixés au métal léger dont la jante correspondante (24) est formée.

2. Une roue comme revendiquée dans la revendication 1, caractérisée en outre en ce que le métal léger constituant chaque élément (22—24) de la roue est l'aluminium, le magnésium ou un alliage de ces métaux et en ce que le métal constituant les chevilles (14$d$) et leur fil support (14$h$) est l'acier.

3. Une roue comme revendiquée dans une quelconque des revendications 1 et 2, caractérisée en ce que chaque cheville (14$d$) est de forme cylindrique, ayant son axe longitudinal central sensiblement parallèle à l'axe de rotation de la roue (20), les chevilles étant soudées sur et supportées par le fil support (14$h$) à leurs extrémités éloignées du bord de jante (30) correspondant.

4. Une roue comme revendiquée dans l'une quelconque des revendications précédentes, caractérisée en outre en ce que les chevilles (14$d$) sont de différentes longueurs, en donnant ainsi une durée de résistance à l'usure différente au bord de jante (30) respectif dans lequel elles sont noyées.

## Patentansprüche

1. Rad (20) eines Raupenkettenfahrzeuges bestehend aus zwei miteinander verbundenen Leichtmetall-Radelementen, wobei jedes Radelement aus einer Scheibe (22) und einer Felge (24) besteht und die beiden Radelemente mittels ihrer Scheiben miteinander verbunden sind, wodurch eine fortlaufende Rille zwischen den benachbarten Kanten (30) der Felgen (24) geschaffen wird, um die Hörner (34) einer unter den Felgen vorbeilaufenden Raupenkette aufzunehmen, und wobei jede der benachbarten Felgenkanten (30) zur Abwendung des durch die Raupenkettenhörner (34) verursachten Verschleißes mit einer Verstärkung (14) versehen ist, dadurch gekennzeichnet, daß die Verstärkung (14) an jeder der benachbarten Felgenkanten (30) aus einer Anzahl von umfangsverteilten, in einem Abstand voneinander angeordneten Hartmetall-Stehbolzen (14d) besteht, die mit einem Metallstützdraht (14d) verschweißt sind und von diesem gehalten werden, wobei alle Stehbolzen und der dazugehörige Stützdraht in der Felgenkante (30) eingebettet und mit dem Leichtmetall verbunden sind, aus dem die entsprechenden Felgen (24) geformt werden.

2. Rad nach Anspruch 1, dadurch gekennzeichnet, daß das Leichtmetall, aus dem die Radelemente (22—24) bestehen, Aluminium oder Magnesium oder eine daraus gebildete Legierung ist und daß das Metall, aus dem die Stehbolzen (14d) und ihr Stützdraht (14h) bestehen, Stahl ist.

3. Rad nach Anspruch 1 oder 2, dadurch gekennzeichnet, daß jeder Stehbolzen (14d) eine zylindrische Form hat und seine in Längsrichtung sich erstreckende Mittelachse im wesentlichen parallel zu der Drehachse des Rads (20) verläuft, wobei die Stehbolzen an ihrem der entsprechenden Felgenkante (30) abgewandten Ende mit dem Stützdraht (14h) verschweißt und von diesem gehalten werden.

4. Rad nach einem der vorhergehenden Ansprüche, dadurch gekennzeichnet, daß die Stehbolzen (14d) unterschiedlich lang sind und dadurch der Felgenkante (30), in die sie eingebettet sind, eine unterschiedliche Verschleißlebensdauer geben.

10

14

12

FIG. 1.

10

14

12

FIG. 2.

16

14

12

18

FIG. 3.

FIG. 4.

14d

14

14h

FIG. 5.

14h    14d    14

14

22

20

FIG. 6

38

28

FIG. 7.

FIG. 8

0 035 913